# EUROPEAN PATENT SPECIFICATION

(11) **EP 1 262 747 B1**
(45) Date of publication and mention of the grant of the patent: **04.04.2012**
(21) Application number: 02291313.1
(22) Date of filing: 29.05.2002
(51) Int. Cl.: G01J 1/04, G01J 1/42, G01J 1/02, B60H 1/00

(54) **Sunload sensor for automotive vehicles**
Sonnensensor für Kraftfahrzeuge
Capteur de rayonnement solaire pour véhicules

(30) Priority: 29.05.2001 US 293521 P; 29.05.2001 CA 2349093
(43) Date of publication of application: 04.12.2002
(73) Proprietor: Silonex Inc., Montreal, Quebec H4E 4N9 (CA)
(72) Inventor: Chiasson, Michel, Lasalle, Quebec H8N 2Z5 (CA); Davidson, Evan, Ulverston, Cumbria LA12 9PG (GB); Lacoursiere, Jean, Cap Rouge, Quebec G1Y 2P7 (CA); Thibault, Simon, Sainte- Foy, Quebec G2G 2K9 (CA); Petrea, Theodore, Longueuil, Quebec J4G 2L6 (CA)
(74) Representative: Domenego, Bertrand

(56) References cited:
- WO-A-99/24951
- US-A- 5 553 775
- US-A- 6 084 228

## Description

### FIELD OF THE INVENTION

The present invention relates to an apparatus to measure the solar radiative power that penetrates inside the cabin of a car through the windshield, and the predominant direction from which this radiative power load is coming, for the purpose of controlling the air conditioning of the car in a manner that maximizes the comfort of the passengers.

### BACKGROUND OF THE INVENTION

Currently sunload sensors, either single- or dual-channel, are commercially available. Most are optoelectronic devices and use a silicon photodiode as a sensing element. A number of vehicle manufacturers have integrated into their products dual-channel sunload sensors in an attempt to provide improved temperature stability in the cabin, and comfort to the passengers. Dual-channel sunload sensors must provide not only a measurement of the total solar heat load entering the car through the windshield, but also an indication of which side of the car, the driver side or the passenger side, is subjected to more or less heat, so that cool air from the air conditioning system be preferentially distributed on the side that requires more.

Present dual-channel sensors do not however fully respond to the need that they at once provide a measurement of the total heat load entering the cabin, and of the relative distribution of this radiative heat load on the driver and on the passenger, especially when the sun is at an angular position that is low with respect to the horizontal plane of the vehicle. Typically, when the sun is low, the total heat load is under-estimated, and the comparative signal of the two channels becomes an unreliable indicator of the relative fractions of the heat load that are affecting the two sides of the cabin.

In addition, some present dual-channel sensors require the presence of sensing elements that are mounted at some angle from one another, a feature that renders their fabrication more complex and costly.

Dual-channel sensors are disclosed in US 6 084 228 and in WO 99/24951.

### SUMMARY OF THE INVENTION

It is a primary object of this invention to provide a dual-channel sunload sensor capable of generating output signals that are reliable indicators of the total solar heat load entering a vehicle through the windshield, and of the relative fractions of the radiative heat loads that are perceived by the driver and by the passenger, for almost all angular positions of the sun. in accordance with the invention, this object is achieved with the dual sunload sensor as defined in claim 1.

The geometry of the sensor is such that it can be constructed economically, as the sensing elements of the two channels rest in the same plane. The output signals from the sensor can be used to control the temperature and distribution of cool air in cars equipped with an air conditioning unit.

### DESCRIPTION OF THE DRAWINGS

This and other advantages of the invention will become apparent from a reading of the following detailed description made with reference to the following drawings in which:
Figure 1 is an exploded view of a sunload sensor according to an example.
Figure 2 is a cutout view showing the internal opaque wall between the clear areas of the housing of the sensor of Fig. 1.
Figure 3 is an external view of the sunload sensor of Fig. 1.
Figure 4 is a top view of the sunload sensor of Fig. 1.
Figure 5 is a diagonal cutout view of the sensor of Fig. 1 showing the internal shapes of the transparent, diffusive and opaque sections of the plastic housing, in a plane whose position is shown in figure 4.
Figure 6 is the same diagonal cutout view of Fig. 5 showing the embodiment of the invention where the diffusive part of the optics has its outer edges exposed directly to light coming from the outside of the sensor.
Figure 7 is a circuit diagram of a preferred embodiment of the invention, where the signal conditioning electronics is entirely passive.
Figure 8 is a circuit diagram of an alternative embodiment of the invention, where the signal conditioning electronic circuit is an active circuit comprising amplifiers.
Figure 9 is a block diagram that illustrates how the sensor related to the data processing and the HVAC system of the vehicle. The dashed line indicates the boundary of the sensor itself.
Figures 10a, 10b and 10c are schematic representations of the paths the light travels towards a photodiode according to an example when no diffuser is present, and when the sun is high above horizon (Fig. 10a), moderately high above the horizon (Fig. 10b) and low on the horizon (Fig. 10c).
Figures 11a and 11b are schematic representations of the paths the light travels towards a photodiode according to another example when a diffuser is present at the base of the lens, when the sun is high above horizon (Fig. 11a) and low on the horizon (Fig. 11b).
Figure 12 illustrates a typical angular response for the driver-side channel, when a thin diffuser is present at the base of the lens, its edges not exposed to external sunlight (dashed line); and when a thicker diffuser is present according to the invention, its edges directly exposed to external sunlight (solid line).
Figure 13 illustrates that the optical axes of the lenses are aligned along the diagonals of virtual cubes resting on the sensing elements, according to another example.

### DETAILED DESCRIPTION OF THE INVENTION

Referring now to the following Figures, the present invention concerns a sunload sensor 10. The sensor 10 consists of the following basic components. A flat substrate 1 commonly used for the manufacture of electronic circuits, either a printed circuit board made of composite material, or a ceramic material, bears circuit metallization (not shown) printed on the substrate by typical methods known in the art. Two silicon photodiode chips 2 are mounted on this substrate circuit, to serve as sensing elements for solar radiation.

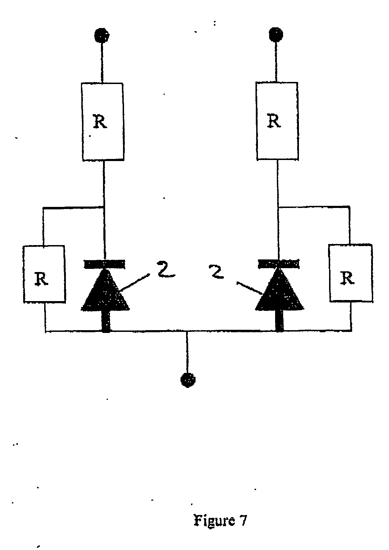

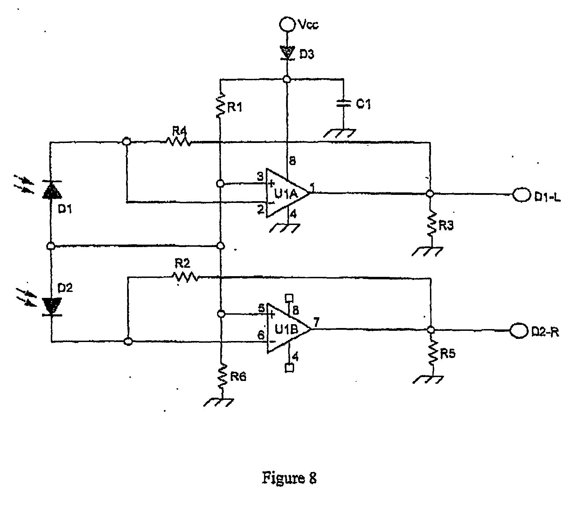

It should be understood that, optionally, other electronic components can be mounted on the same substrate, to tailor the signal of the photodiodes 2 to the specific requirements of the electrical circuitry used in a particular vehicle model; such electronic components may particularly include capacitors, amplifiers and resistors, including the printed thick film version of the latter. Circuit diagrams for two alternative versions of such conditioning electronics are shown in Figures 7 and 8. Figure 7 shows a circuit that is entirely passive, where each of the photodiodes 2 is accompanied by appropriate resistors both in parallel and in series. The output of the circuit is at the top of the Figure. The passive components can be thick film resistors that can be laser trimmed to precisely balance the output from the two channels of the sensor 10.

Alternatively, Figure 8 shows an active circuit including op-amps for conditioning the signal. It will however be appreciated that any appropriate circuit will meet the objects of the present invention.

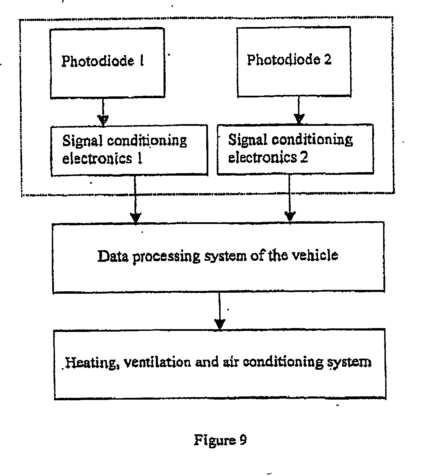

An electrical interface links the sensor 10 internal circuitry to the external circuitry of the vehicle, so that electrical signals provided by the two photodiode sensing elements 2, and suitably conditioned by the electronics comprised in the sensor 10, are made separately available to the external circuitry of the vehicle (Figure 9 illustrates how these signals relate to the data processing and the heating, ventilation and air conditioning systems of the vehicle). It will be appreciated that each vehicle manufacturer, and indeed each different type of vehicle, will have proprietary external circuitry to control the heating, ventilating and air conditioning system of the vehicle, and that appropriate interface circuitry is required to properly interface with the external circuitry. However, such a design is within the skill of a person versed in this field, and beyond the scope of the present invention. The present sensor deals with a solution for properly discriminating between driver side and passenger side reception of solar radiation by optically isolating the respective photodiodes, and advantageously, with being able to measure radiation although the sun is low on the horizon.

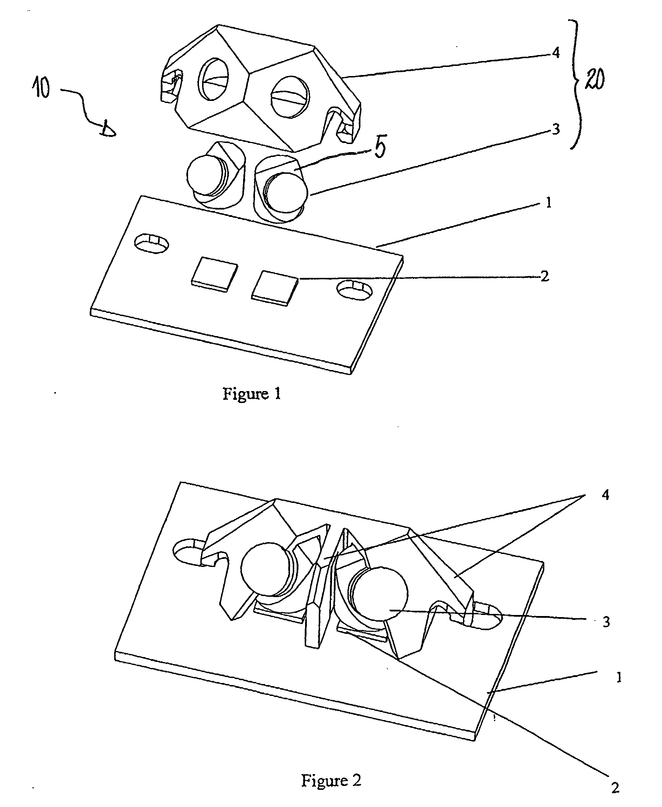

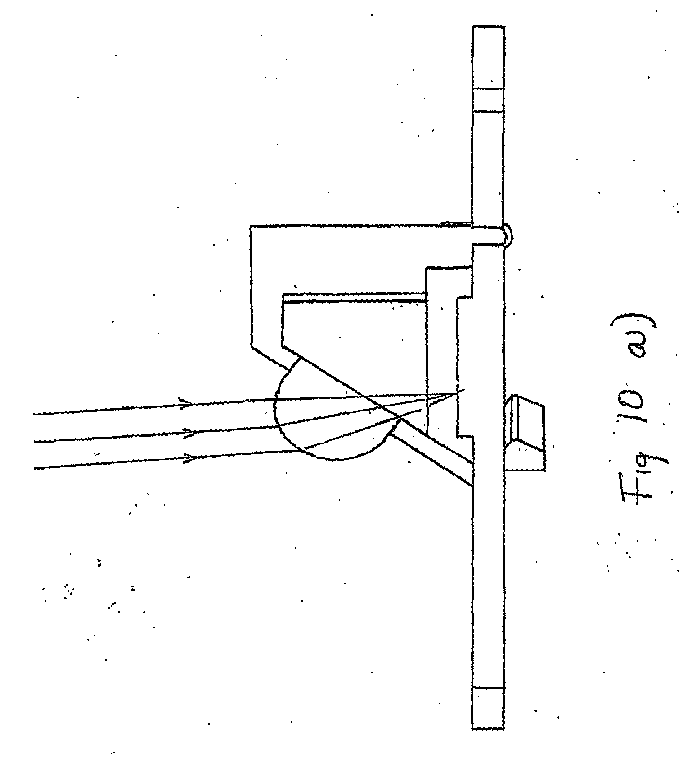

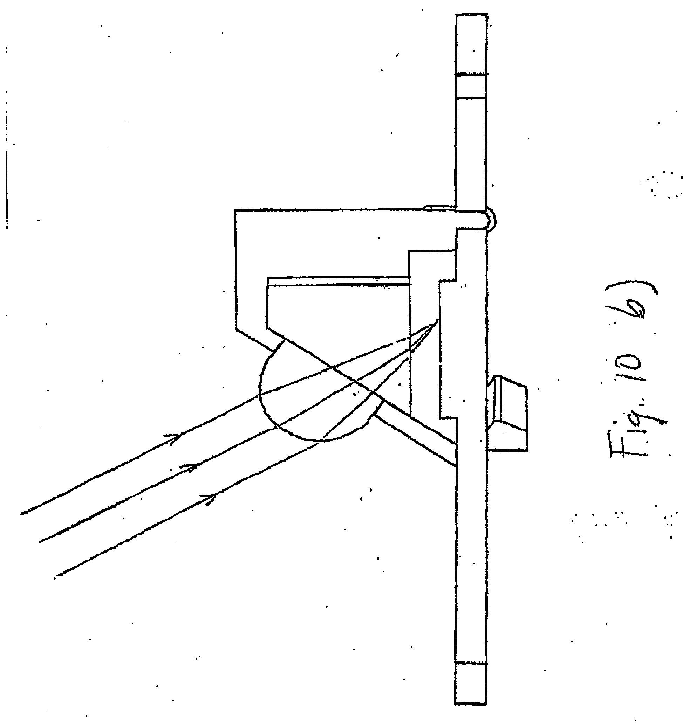

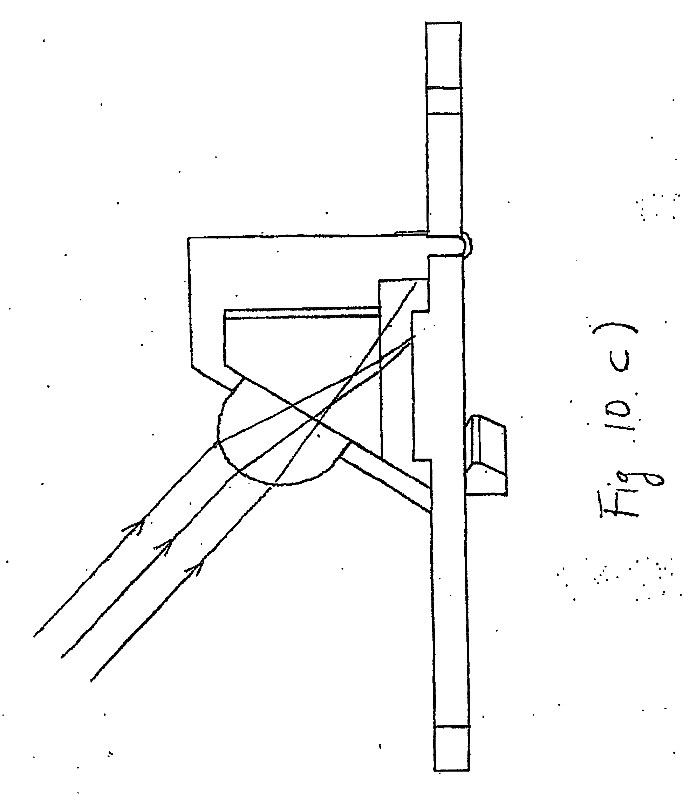

The circuit and photodiodes are mounted in a housing 20. The housing comprises two distinct transparent areas 3 on its top part, held and separated by an opaque section 4. The transparent areas have external convex shapes (better seen in Fig. 1) that collect solar radiative power by refracting light coming from one side of a plane bisecting the sensor 10 to a respective sensing photodiode 2. An aspect of the shape of the transparent areas is that the light received is guided and collected to the appropriate photodiode notwithstanding the angular position of the sun on the horizon. Stated differently, the transparent areas act as a beam deflector, so that even if the sun is a few degrees above horizon, the near totality of the light will reach the photodiode. This requires optics that are within the skill of a person expert in this field, and schematic representations of the path followed by the light are shown in Figs. 10a, 10b and 10c. In Fig. 10a, the sun is high above horizon, whereas in Fig. 10b, the sun is moderately high above the horizon and in Fig. 10c, the sun is low on the horizon.

In an example, the driver-side transparent area 3 guides light to the driver-side photodiode 2, and the passenger side transparent area 3 guides light to the passenger side photodiode 2. The transfer of light from the convex shaped transparent areas 3 to the photodiodes 2 can be improved by the introduction between them of a piece of clear plastic having the shape of a truncated cylinder 5, better shown in Figs.1 and 2.

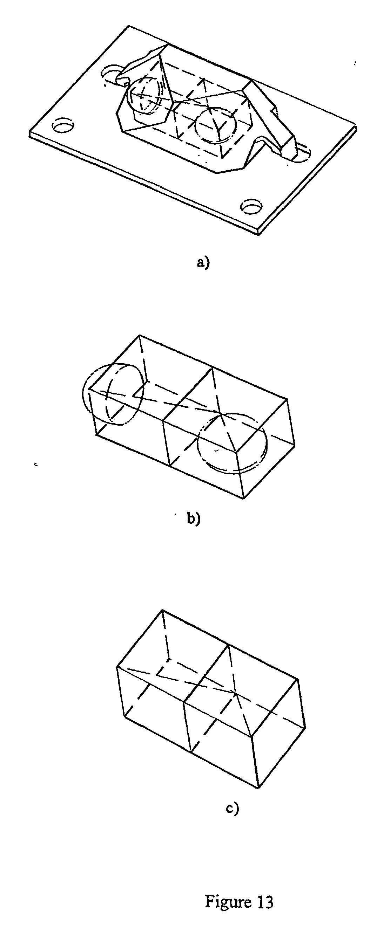

In an example, the optical axes of the transparent areas 3 are inclined in a direction corresponding substantially to the diagonals of virtual cubes resting in the plane of the sensing elements. This is better shown in Figs. 13a, 13b and 13c.

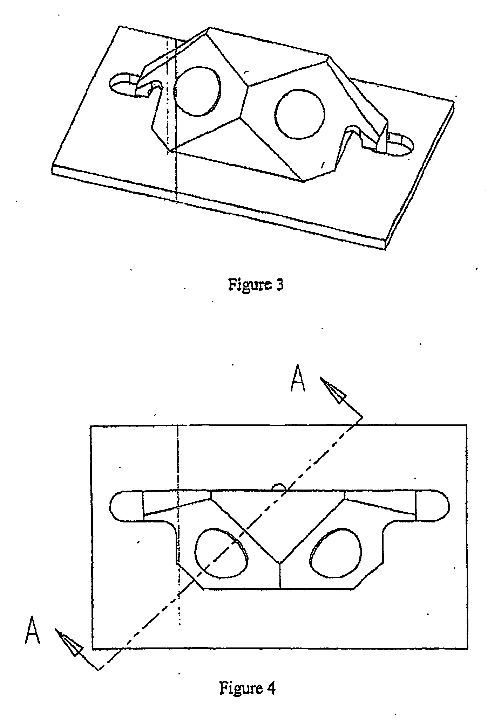

The exact shape of the transparent and opaque parts can be adjusted to obtain an output-signal versus sun-angular-position relationship adapted to the particular requirements of a given application. Figures 1 through 5 illustrate the shapes of these parts in one embodiment.

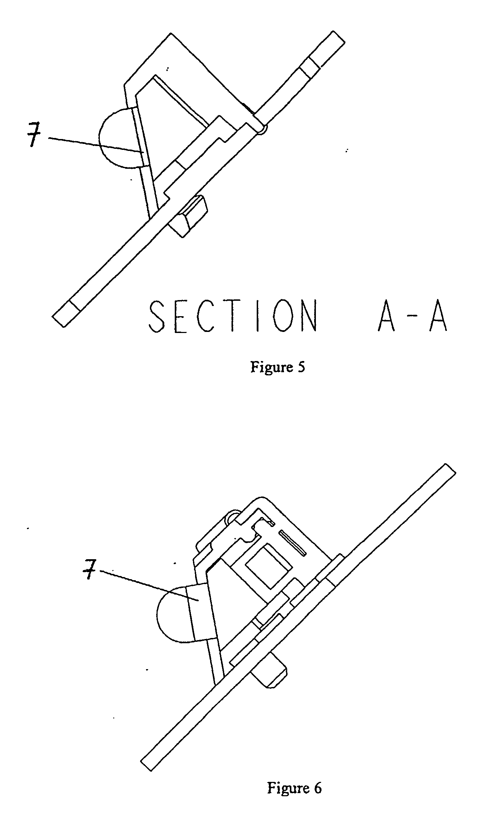

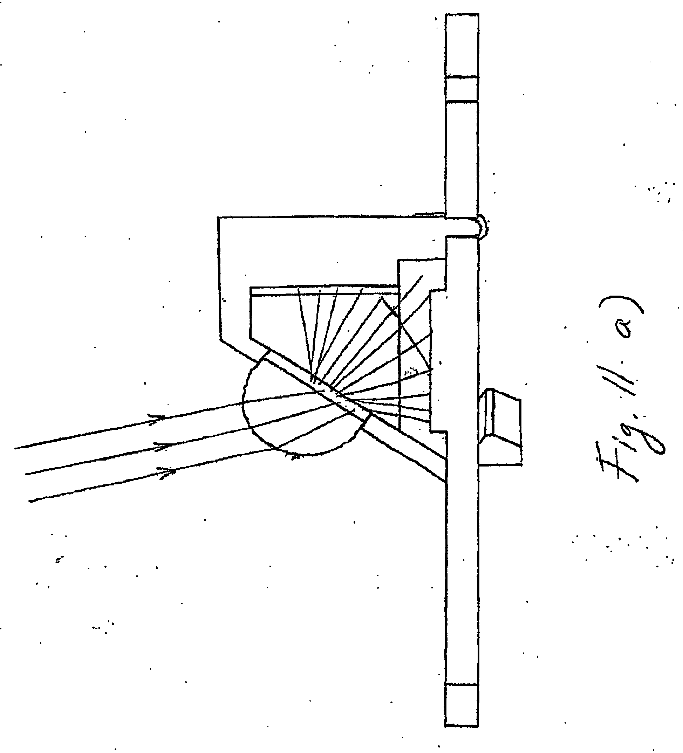

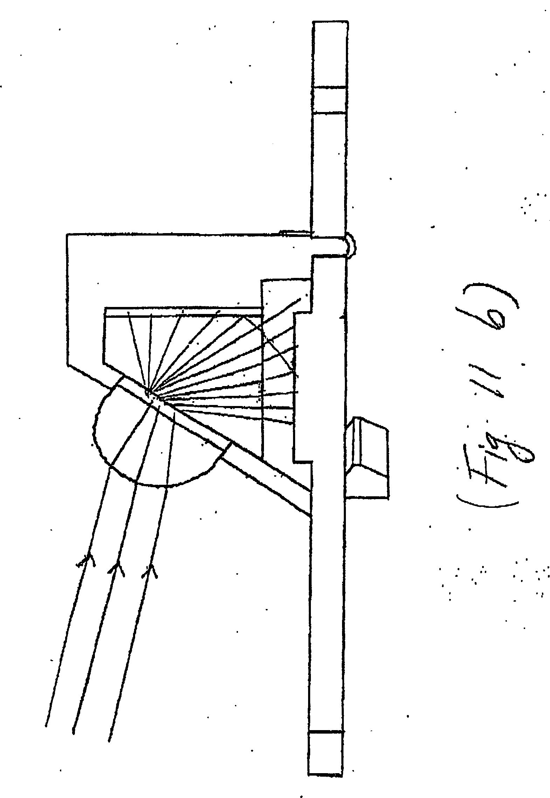

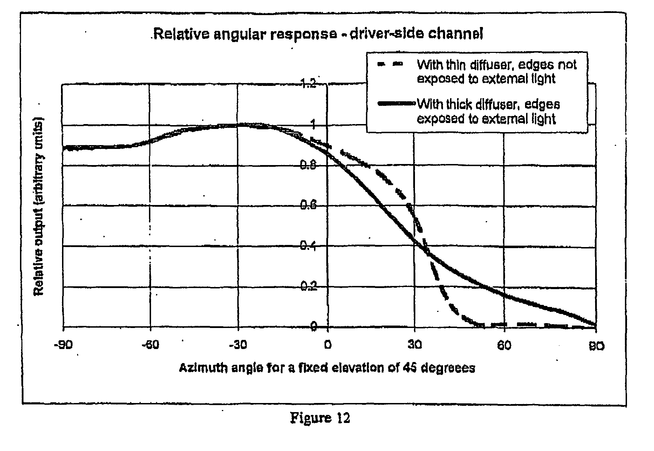

A layer of diffusive plastic material 7, shown on Figure 5, is added at the base of the transparent plastic parts with external convex shapes, such that light collected by the convex parts is diffused towards the sensing element. This can serve to broaden and smooth out the angular dependency of the sensor output. Figures 11a and 11b illustrate schematically the paths of light for two different angular positions of the sun, when such a diffuser is present. Figure 12 illustrates the resulting relative output signal of the driver-side channel, as function of the angular position of the sun. The layer of light diffusive material preferably consists of clear polymer in which grains of titanium dioxide are dispersed, the density and dimensional distribution of grains being selected so as to optimize the Rayleigh scattering of light. The dashed curve on Figure 12 illustrates how the output of the driver-side channel of the sensor varies with the angular azimuthal position of the sun, for one value of the elevation angle.

According to the invention, this layer of diffusive material is shaped and located so that its outer edges are directly exposed to incoming solar radiation, as illustrated on Figure 6. This provides a second path for light to reach the sensing elements: either by the convex optical part, through the diffusive part and eventually to the sensing element, or directly by the edge of the diffusive part, through the diffusive part and to the sensing element. This alters the angular dependency of the output signal of the apparatus in a manner that may be advantageous for some applications, such as cases where it is desired that the output of a channel remain at some low, but non-zero, value even when the angular position of the sun is far on the side of the sensor opposite that corresponding to said channel. The solid curve on Figure 12 illustrates how the output of the driver-side channel of the sensor varies with the angular azimuthal position of the sun, for one value of the elevation angle, for the embodiment of the invention.

In its automotive application, the sensor 10 is mounted in a vehicle, generally on the dash board and under the windshield, so that the line joining the centers of the two photodiode sensing elements is approximately perpendicular to the longitudinal axis of the vehicle, and so that the surfaces of the sensing elements are approximately parallel to the surface over which the vehicle rests.

In operation, the sensor 10 is exposed to sunlight that penetrates the vehicle through the windshield. If the sun is located very close to the projection of the median plane of the car into the sky, the light strikes the two transparent convex areas at the same relative angle, and the same amount of light is brought to the two sensing elements. The two electrical outputs are then equal. If the sun moves to one side of the longitudinal plane, the shape of the transparent optical areas, and of the opaque wall that separates them, is such that the signal from the sensing element corresponding to the side where the sun is located remains approximately constant, while the signal of the opposite sensing element drops to near zero. In this manner the amplitude of the higher of the two output signals provides a measurement of the solar radiative power, while the ratio of, or the difference between, the two output signals provides information as to whether the sun is located on the left side or on the right side of the median plane of the vehicle.

In the implementation according to the invention where light is allowed to enter the apparatus also through the edge of a diffusive plastic piece located at the base of the transparent convex plastic parts, the signal does not drop all the way to zero when the sun moves to the opposite side of the longitudinal plane, but to some low value.

i The invention presents many advantages over prior art. It provides signals that are better suited to the control of the air conditioning of a car so as to provide optimum comfort to both the driver and the front-seat passenger. It can be manufactured economically thanks to the simplicity of its geometry

Its output signals provide direct and separate information on the level of solar power entering the car, irrespective of the direction of the sky from which it is coming, and of the part of the sky in which the sun is located, either on the left or on the right of the longitudinal plane of the car. This is the information needed to properly control the air conditioning in a vehicle, the total sunload value indicating the overall degree of air conditioning needed, and the general angular position of the sun indicating whether the cold air should be preferentially directed at the driver side or at the passenger side.

Whereas other such apparatus provide this type of angular discrimination of the sun position by using two photodiode sensing elements mounted at an angle with one another, this can also be done by inclining the optical axes of the clear convex plastic parts of the housing instead. This allows for more economical fabrication of the sensing circuit, since all the elements, including the two photodiodes, can be mounted on a single flat substrate.

Whereas still other apparatus provide some angular discrimination of the sun position, and make use of two photodiode sensing elements mounted in the same plane, by the method of diffusing light through an appropriately shaped opalescent piece of plastic material, the apparatus described herein maintains a near constant signal output when the sun comes down very close to the horizon, in contrast with those other apparatus whose output signal typically drops significantly when the sun approaches the horizon by less than 20 degrees.

The concept of the present invention is such that the geometrical parameters of the clear optical regions, and of the optional diffusive areas, and of the opaque region that separates them, can be modified to adjust the manner in which the output per channel varies with the angular position of the sun, enabling the sensor to meet specific application requirements.

In an example, the circuit is mounted on a ceramic substrate and incorporates thick film resistors that can be trimmed by a laser beam so as to insure that the level of signal is equal from the two sensing elements when the sun is located in the longitudinal plane of the vehicle, and is also the same from one sensor to another for the same level of solar power, in spite of the variation in the intrinsic sensitivity of the photodiodes from chip to chip.

## Claims

1. A dual sunload sensor to sense the intensity and directionality of solar radiative power entering the cabin of a vehicle through a windshield, said sensor comprising:
a housing (20);
a substrate (1) bearing two light sensitive semiconductor elements (2) thereon housed in said housing (20),
two lenses (3), one lens (3) being located over one of said light sensitive semiconductor element (2), the other lens (3) being located over the other light sensitive semiconductor element (2), each of said lenses (3) being transparent, each of said lenses (3) having an external convex shape for collecting light and a base, each of said lenses (3) for deflecting light collected by the external convex shape toward a respective light sensitive semiconductor element (2); and
an optically opaque wall (4) located separating said two lenses (3);
**characterized in that** it further comprises a layer (7) of light diffusive material added to the base of each said lens such that light collected by the external convex shape is diffused towards the light sensitive semiconductor element (2) through the layer of light diffusive material,
wherein each layer of light diffusive material has its edges at least partially exposed directly to incoming solar light for light to reach the sensitive element either by the lens, through the diffusive layer and to the sensitive element or directly by the edge of the diffusive layer, through the diffusive layer and to the sensitive element.

2. The sensor of claim 1, wherein said sensor further includes a light guide in the shape of a truncated cylinder between a base of each said lens (3) and the corresponding light sensitive element (2) for said lens (3).

3. The sensor of claim 1 or 2, wherein the layer (7) of light diffusive material consists of clear polymer in which grains of titanium dioxide are dispersed.

4. A sensor according to any one of the preceding claims, wherein said light sensitive elements (2) are silicon photodiodes.

5. A sensor according to any one of the preceding claims, further comprising passive electronic components mounted on the substrate along with said light sensitive elements (2) for adjusting the electrical output of the sensor.

6. A sensor according to any one of the preceding claims further comprising active electronic components mounted on the substrate along with said light sensitive elements (2) and passive electronic components, for the purpose of amplifying and adjusting the electrical output of the sensor.

7. A sensor according to any one of the preceding claims, wherein each lens (2) has an external convex shape.

8. The sensor of claim 3, wherein the light guide is a piece having the shape of a truncated cylinder.

9. A sensor according to any one of the preceding claims, wherein the two light sensitive semiconductor elements (2) are in the same plane.

## Patentansprüche

1. Dualer Sonnenbelastungssensor, um die Intensität und die Gerichtetheit von Solarstrahlungsleistung, die in den Fahrgastraum eines Fahrzeugs durch eine Windschutzscheibe eintritt, zu erfassen, wobei der Sensor umfasst:
ein Gehäuse (20);
ein Substrat (1), das zwei lichtempfindliche Halbleiterelemente (2) unterstützt und in dem Gehäuse (20) untergebracht ist,
zwei Linsen (3), wobei sich eine Linse (3) über einem der lichtempfindlichen Halbleiterelemente (2) befindet, die andere Linse (3) sich über dem anderen lichtempfindlichen Halbleiterelement (2) befindet, jede der Linsen (3) lichtdurchlässig ist, jede der Linsen (3) eine äußere konvexe Form zum Sammeln von Licht und eine Basis besitzt und jede der Linsen (3) der Ablenkung von Licht, das durch die äußere konvexe Form gesammelt wird, zu einem entsprechenden lichtempfindlichen Halbleiterelement (2) dient; und
eine optisch undurchlässige Wand (4), die so angeordnet ist, dass sie die zwei Linsen (3) trennt;
**dadurch gekennzeichnet, dass** er ferner eine Schicht (7) aus einem lichtstreuenden Material enthält, die zu der Basis jeder der Linsen hinzugefügt ist, so dass Licht, das durch die äußere konvexe Form gesammelt wird, durch die Schicht aus lichtstreuendem Material zu dem lichtempfindlichen Halbleiterelement (2) gestreut wird,
wobei die Kanten jeder Schicht aus lichtstreuendem Material wenigstens teilweise direkt für ankommendes Sonnenlicht freiliegen, damit Licht das empfindliche Element entweder durch die Linse, durch die streuende Schicht und zu dem empfindlichen Element oder direkt durch die Kante der diffusen Schicht, durch die diffuse Schicht und zu dem empfindlichen Element erreicht.

2. Sensor nach Anspruch 1, wobei der Sensor ferner eine Lichtführung in Form eines abgeschnittenen Zylinders zwischen einer Basis jeder der Linsen (3) und dem entsprechenden lichtempfindlichen Element (2) für die Linse (3) umfasst.

3. Sensor nach Anspruch 1 oder 2, wobei die Schicht (7) aus lichtstreuendem Material aus durchsichtigem Polymer besteht, in dem Titandioxid-Körner dispergiert sind.

4. Sensor nach einem der vorhergehenden Ansprüche, wobei die lichtempfindlichen Elemente (2) Silicium-Photodioden sind.

5. Sensor nach einem der vorhergehenden Ansprüche, der ferner passive elektronische Komponenten umfasst, die auf dem Substrat zusammen mit den lichtempfindlichen Elementen (2) montiert sind, um den elektrischen Ausgang des Sensors einzustellen.

6. Sensor nach einem der vorhergehenden Ansprüche, der ferner aktive elektronische Komponenten umfasst, die auf dem Substrat zusammen mit den lichtempfindlichen Elementen (2) und passiven elektronischen Komponenten montiert sind, um den elektrischen Ausgang des Sensors zu verstärken und einzustellen.

7. Sensor nach einem der vorhergehenden Ansprüche, wobei jede Linse (2) eine äußere konvexe Form besitzt.

8. Sensor nach Anspruch 3, wobei die Lichtführung ein Teil ist, das die Form eines abgeschnittenen Zylinders hat.

9. Sensor nach einem der vorhergehenden Ansprüche, wobei sich die zwei lichtempfindlichen Halbleiterelemente (2) in derselben Ebene befinden.

## Revendications

1. Capteur de charge solaire double pour détecter l'intensité et l'orientation de puissance de rayonnement solaire entrant dans la cabine d'un véhicule à travers un pare-brise, ledit capteur comprenant :
un boîtier (20) ;
un substrat (1) supportant deux éléments à semi-conducteur sensibles à la lumière (2) sur celui-ci logé dans ledit boîtier (20),
deux lentilles (3), une lentille (3) étant positionnée par-dessus un desdits éléments à semi-conducteur sensibles à la lumière (2), l'autre lentille (3) étant positionnée par-dessus l'autre élément à semi-conducteur sensible à la lumière (2), chacune desdites lentilles (3) étant transparente, chacune desdites lentilles (3) possédant une forme convexe externe pour collecter de la lumière et une base, chacune desdites lentilles (3) étant destinée à défléchir de la lumière collectée par la forme convexe externe vers un élément à semi-conducteur sensible à la lumière respectif (2) ; et
une paroi optiquement opaque (4) positionnée pour séparer lesdites deux lentilles (3) ;
**caractérisé en ce qu'**il comprend en outre une couche (7) de matériau de diffusion de lumière ajouté à la base de chaque dite lentille de sorte que la lumière collectée par la forme convexe externe soit diffusée vers l'élément à semi-conducteur sensible à la lumière (2) à travers la couche de matériau de diffusion de lumière,
dans lequel les bords de chaque couche de matériau de diffusion de lumière sont au moins partiellement exposés directement à la lumière solaire incidente pour que la lumière atteigne l'élément sensible par la lentille, à travers la couche de diffusion et jusqu'à l'élément sensible ou directement par le bord de la couche de diffusion, à travers la couche de diffusion et jusqu'à l'élément sensible.

2. Capteur selon la revendication 1, dans lequel ledit capteur comprend en outre un guide de lumière sous forme de cylindre tronqué entre une base de chaque dite lentille (3) et l'élément sensible à la lumière correspondant (2) pour ladite lentille (3).

3. Capteur selon la revendication 1 ou 2, dans lequel la couche (7) de matériau de diffusion de lumière est constituée de polymère transparent dans lequel des grains de dioxyde de titane sont dispersés.

4. Capteur selon une quelconque des revendications précédentes, dans lequel lesdits éléments sensibles à la lumière (2) sont des photodiodes de silicium.

5. Capteur selon une quelconque des revendications précédentes, comprenant en outre des composants électroniques passifs montés sur le substrat conjointement avec lesdits éléments sensibles à la lumière (2) pour régler le rendement électrique du capteur.

6. Capteur selon une quelconque des revendications précédentes, comprenant en outre des composants électroniques actifs montés sur le substrat conjointement avec lesdits éléments sensibles à la lumière (2) et des composants électroniques passifs, dans le but d'amplifier et de régler le rendement électrique du capteur.

7. Capteur selon une quelconque des revendications précédentes, dans lequel chaque lentille (2) possède une forme convexe externe.

8. Capteur selon la revendication 3, dans lequel le guide de lumière est une pièce possédant la forme d'un cylindre tronqué.

9. Capteur selon une quelconque des revendications précédentes, dans lequel les deux éléments à semi-conducteur sensibles à la lumière (2) sont dans le même plan.
